# EUROPÄISCHE PATENTSCHRIFT

(11) **EP 2 339 247 B1**
(45) Veröffentlichungstag und Bekanntmachung des Hinweises auf die Patenterteilung: **28.08.2013**
(21) Anmeldenummer: 10160732.3
(22) Anmeldetag: 22.04.2010
(51) Int. Cl.: F24D 11/00, F24D 17/00

(54) **Verfahren zur Erwärmung von Brauchwasser**
Method for heating service water
Procédé de chauffage d'eau non potable

(30) Priorität: 23.04.2009 AT 6212009
(43) Veröffentlichungstag der Anmeldung: 29.06.2011
(73) Patentinhaber: VKR Holding A/S, 2970 Hørsholm (DK)
(72) Erfinder: Engelhart, Klaus, 3508 Höbenbach (AT); Obkircher, Leo, 9972 Virgen (AT); Jedrejcic, Stefan, 9342 Gurk (AT)
(74) Vertreter: Babeluk, Michael

(56) Entgegenhaltungen:
- DE-A1- 4 301 723
- DE-A1- 19 815 521
- DE-C1- 19 807 657
- DE-U1- 7 707 178
- DE-U1- 20 019 028
- GB-A- 362 693

## Beschreibung

Die Erfindung betrifft ein Verfahren zur Erwärmung von Brauchwasser gemäß dem Oberbegriff von Patentanspruch 1.

Solaranlagen werden häufig sowohl zur Beheizung von Räumen als auch zu Erwärmung von Brauchwasser eingesetzt. Um einen Brauchwasserspeicher zu vermeiden, bei dem die Gefahr der Legionellen-Bildung besteht, wird derzeit bevorzugt die Wärme in einen Pufferspeicher gespeichert, der mit einem Wärmeträgermedium gefüllt ist. Ein solches Wärmeträgermedium ist üblicherweise auf Basis von Wasser hergestellt, dem Korrosionsschutzmittel, Frostschutzmittel und dergleichen zugesetzt sind. Bei bekannten Systemen erfolgt die Erwärmung des Brauchwassers, indem dem Pufferspeicher heißes Wärmeträgermedium entnommen wird und über einen Wärmetauscher das Kaltwasser entsprechend erwärmt wird. Um die maximale Temperatur des Pufferspeichers ausnutzen zu können, wird das Wärmeträgermedium jedenfalls aus dem oberen Bereich des Pufferspeichers, und zwar meistens an der höchsten Stelle entnommen. Das im Brauchwasser-Wärmetauscher abgekühlte Wärmeträgermedium wird in weiterer Folge in den unteren oder mittleren Bereich des Pufferspeichers rückgeführt. Eine solche Lösung ist beispielsweise in der DE 10 2007 031 134 B beschrieben.

Um die Gefahr von Verbrühungen zu vermeiden und um die Verkalkung der Leitungen gering zu halten, wird die maximale Brauchwassertemperatur zumeist auf einen Wert von etwa 55°C beschränkt. Je nach Wärmeangebot auf der Primärseite, also bei Solaranlagen bei starker Sonneneinstrahlung, kann jedoch die Maximaltemperatur im Pufferspeicher wesentlich darüber liegen, zum Beispiel bei 95°C. Es ist daher in der Regel ein Mischventil vorgesehen, mit dem die Eingangstemperatur des Wärmeträgermediums am Brauchwasser-Wärmetauscher beschränkt werden kann. Dieses Mischventil wird zumeist aufgrund eines Temperaturfühlers geregelt, der die Temperatur des erwärmten Brauchwassers misst.

Nachteilig an dieser bekannten Lösung ist, dass in vielen Betriebszuständen heißes Wärmeträgermedium künstlich abgekühlt wird, wodurch Exergie nutzlos verbraucht wird. Dies ist insbesondere sehr nachteilig für den Gasamtwirkungsgrad der Anlage, da der Wirkungsgrad von Sonnenkollektoren mit steigender Temperatur dieses Wärmeträgermediums stark absinkt. Ein weiterer Nachteil der oben beschriebenen Lösung besteht darin, dass es sehr schwierig ist, die Temperatur des warmen Brauchwassers befriedigend auf einen vorgegebenen Wert zu regeln. In der Praxis kommt es aufgrund der systembedingten Ansprechverzögerungen stets zu einer Schwankung der tatsächlichen Brauchwassertemperatur um den Sollwert, was von vielen Nutzern als unangenehm empfunden wird.

Eine weitere bekannte Lösung zur Erwärmung von Brauchwasser ist in der DE 219 028 U beschrieben. Es handelt sich dabei um ein Zentralheizungssystem mit einem Pufferspeicher, in dem ein Brauchwasser-Wärmetauscher in der Form einer Rohrschlange eingebaut ist. Das Kaltwasser wird dabei dem Brauchwasser-Wärmetauscher im unteren Bereich des Pufferspeichers zugeführt, strömt in der Rohrschlange nach oben und wird im oberen Bereich des Pufferspeichers erwärmt entnommen. Auch hier ist eine entsprechende Mischung erforderlich, wenn eine übermäßige Temperatur des erwärmten Brauchwassers vermieden werden soll. Dementsprechend treten auch bei diesem System Einbußen im Wirkungsgrad auf, wie dies oben beschrieben worden ist.

Die hier diskutierten Nachteile der bekannten Systeme werden dann besonders verstärkt und gravierend, wenn eine Brauchwasserzirkulationsleitung vorgesehen ist. Eine solche Brauchwasserzirkulationsleitung wird eingesetzt, um an den vom Pufferspeicher entfernten Entnahmestellen von Warmwasser sofort warmes Wasser zur Verfügung zu stellen. Dabei wird durch eine leistungsschwache Zirkulationspumpe erwärmtes Brauchwasser zu allen Verbrauchern geführt und wenn es dort nicht entnommen wird, durch eine Zirkulationsleitung wieder rückgeführt. Aufgrund der oben beschriebenen Mischung kommt es dabei auch dann, wenn überhaupt kein warmes Brauchwasser entnommen wird, zu einer permanenten Abkühlung des Pufferspeichers, solange das Wärmeträgermedium darin eine höhere Temperatur aufweist, als die eingestellte maximale Brauchwassertemperatur.

Darüber hinaus kann auch die Temperaturschichtung im Pufferspeicher empfindlich gestört werden, wenn beispielsweise das zur permanenten Erwärmung des Brauchwasserumlaufs benötigte Wärmeträgermedium in den unteren Bereich des Pufferspeichers rückgeführt wird. Typischerweise hat dieses Wärmeträgermedium eine Temperatur von etwa 45°C bis 50°C, während der Inhalt des Pufferspeichers im unteren Bereich bei geringem Solarangebot eine Temperatur von 10°C bis 20°C aufweisen kann. Bei dieser Temperatur könnte auch bei geringem Solarangebot ein Sonnenkollektor mit hohem Wirkungsgrad Wärme in dem Pufferspeicher einspeisen, was aber durch die Erwärmung in diesem Bereich vereitelt wird. Dies führt in der Folge zu einer weiteren Verschlechterung des gesamten Wirkungsgrades.

Weiters zeigt die DE 198 15 521 A einen Speicherbehälter mit einem Wärmetauscher im unteren Bereich in dem Kaltwasser vorerwärmt wird. In weiteren Wärmetauschern wird dieses Brauchwasser auf die endgültige Temperatur gebracht.

Die Beladung des Speicherbehälters erfolgt durch einen Solarkollektor über Ladungswärmetauscher.

Auch bei diesem System kommt es zu einer unzulässig starken Abkühlung des Pufferspeichers, die den Wirkungsgrad beeinträchtigt.

Weitere bekannte Lösungen sind in der DE 198 07 657 C, der GB 362 693 A und der FR 65 107 E offenbart. Diese Lösungen weisen ebenfalls die oben beschriebenen Nachteile auf.

Die DE 77 07 178 U zeigt eine weitere Lösung zur Erwärmung von Brauchwasser in einem Pufferspeicher. Dieses Dokument offenbart den Oberbegriff der Ansprüche 1 und 6.

Aufgabe der vorliegenden Erfindung ist es, diese Nachteile zu vermeiden und ein Verfahren anzugeben, bei dem Brauchwasser sicher und zuverlässig erwärmt werden kann, ohne eine Verschlechterung des Gesamtwirkungsgrades der Anlage in Kauf nehmen zu müssen. Insbesondere sollen diese Aufgaben erfüllt werden, wenn eine Brauchwasserzirkulationseinrichtung vorgesehen ist. Eine weitere Aufgabe der vorliegenden Erfindung ist es, eine möglichst gleichmäßige Brauchwassertemperatur zur Verfügung zu stellen.

Erfindungsgemäß werden diese Aufgaben durch ein Verfahren mit den Merkmalen von Patentanspruch 1 gelöst. Die zweistufige Erwärmung des Brauchwassers ermöglicht es, Energieverluste in den unterschiedlichen Betriebszuständen weitgehend zu vermeiden.

Das erfindungsgemäße Verfahren sieht vor, dass das Brauchwasser vor dem Eintritt in den Brauchwasser-Wärmetauscher durch einen Vorerwärmungs-Wärmetauscher geführt wird, der im unteren Bereich des Pufferspeichers angeordnet ist und dass das Wärmeträgermedium nach Durchlaufen des Brauchwasser-Wärmetauschers in den mittleren Bereich des Pufferspeichers rückgeführt wird. Das zuströmende Kaltwasser wird also zunächst im unteren Bereich des Pufferspeichers erwärmt, wobei letztlich eine Temperatur erreicht wird, die im Wesentlichen der Temperatur des Wärmeträgermediums im Pufferspeicher entspricht, die auf der Höhe des Austrittes des Vorerwärmungs-Wärmetauschers vorliegt. In weiterer Folge wird das vorerwärmte Brauchwasser durch den Brauchwasser-Wärmetauscher geführt, um die endgültige, gewünschte Temperatur zu erreichen.

Es sind nun verschiedene Betriebszustände möglich. Wenn seit längerer Zeit kein Solar-Wärmeangebot vorgelegen hat, dann wird sich die Temperatur des Pufferspeichers im unteren Bereich auf einem relativ niedrigen Temperaturniveau befinden. Sofern der Pufferspeicher zuletzt primär durch die Raumheizung belastet war, entspricht somit die Temperatur des Pufferspeichers an dieser Stelle im Wesentlichen der Rücklauftemperatur der Heizung, also beispielsweise 25°C. Wird nun warmes Brauchwasser entnommen, so wird der Pufferspeicher im unteren Bereich durch das durchströmende Kaltwasser auf eine Temperatur von beispielsweise 12°C gekühlt, so dass schon bei äußerst geringem Solarangebot die Möglichkeit der Ausnutzung des Sonnenkollektors besteht. Das beispielsweise auf eine Temperatur von 30°C erwärmte Brauchwasser durchströmt nun den Brauchwasser-Wärmetauscher und wird auf die eingestellte Solltemperatur von 55°C erwärmt. Da bereits eine Vorerwärmung stattgefunden hat, ist nur die Entnahme von entsprechend weniger heißem Brauchwasser aus dem oberen Bereich des Pufferspeichers erforderlich. Die Verluste durch eine allfällig notwendige Mischung des heißen Brauchwassers werden dementsprechend reduziert. Ein weiterer Vorteil der erfindungsgemäßen Lösung besteht darin, dass aufgrund der Vorerwärmung des Brauchwassers die Regelung der endgültigen Brauchwassertemperatur wesentlich unkritischer ist und die Solltemperatur deutlich genauer eingehalten werden kann.

Eine verringerte Störung der Temperaturschichtung im Pufferspeicher kann erfindungsgemäß dadurch erzielt werden, dass das Wärmeträgermedium nach Durchlaufen des Brauchwasser-Wärmetauschers in den mittleren Bereich des Pufferspeichers rückgeführt wird. Außerdem wird insbesondere bei Vorliegen einer Brauchwasserzirkulationsanlage eine unerwünschte Erwärmung des unteren Abschnittes des Pufferspeichers verhindert.

Eine alternative Ausführungsvariante des erfindungsgemäßen Verfahrens sieht vor, dass das Brauchwasser dadurch erwärmt wird, dass es nach Durchlaufen des Vorerwärmungs-Wärmetauschers durch einen oberen Wärmetauscher geführt wird, der im oberen Bereich des Pufferspeichers angeordnet ist. Durch entsprechende Ventile kann dabei je nach Temperaturniveau und Temperaturschichtung im Pufferspeicher jeder der beiden Wärmetauscher ganz oder teilweise umgangen werden, um Wärmeverluste zu vermeiden.

Die Energieverluste können verringert werden und die Regelung der Brauchwassertemperatur kann verbessert werden, indem das aus dem oberen Bereich des Pufferspeichers entnommene Wärmeträgermedium mit Wärmeträgermedium gemischt wird, das den Brauchwasser-Wärmetauscher durchlaufen hat. Dies beruht im Wesentlichen auf der Tatsache, dass im Brauchwasser-Wärmetauscher nur mehr eine geringe Erhöhung der Brauchwassertemperatur stattfindet und dementsprechend ein geringerer Durchsatz an Wärmeträgermedium erforderlich ist. Dadurch wird auch die Gefahr der Verkalkung des Brauchwasser-Wärmetauschers verringert.

Um eine Überschreitung der Brauchwasser-Solltemperatur auch dann zu verhindern, wenn der Pufferspeicher auch im unteren Bereich hohe Temperaturen aufweist, kann in einer besonders bevorzugten Ausführungsvariante des Verfahrens der vorliegenden Erfindung vorgesehen sein, dass die Temperatur des Pufferspeichers im Bereich des Vorerwärmungs-Wärmetauschers - und zwar insbesondere bei seinem Austritt - gemessen wird und bei Überschreitung eines vorbestimmten Grenzwerts Kaltwasser dem im Vorerwärmungs-Wärmetauscher erwärmten Brauchwasser zugemischt wird. Dies bedeutet, dass Brauchwasser, das den Vorerwärmungstauscher mit einer zu hohen Temperatur verlässt, durch Kaltwasser auf die gewünschte Solltemperatur eingestellt wird.

Weiters ist es bevorzugt, dass die Erwärmung des Wärmeträgermediums im Pufferspeicher durch einen Solarkollektor erfolgt, indem Wärmeträgermedium aus dem unteren Bereich des Pufferspeichers entnommen wird, in einem von einem durch einen Solarkreislauf gespeisten externen Ladungs-Wärmetauscher erwärmt wird und in den Pufferspeicher rückgeführt wird, wobei vorzugsweise die Höhe der Einspeisung in Abhängigkeit von der Temperaturschichtung im Pufferspeicher gewählt wird. Die Temperaturschichtung wird geringst möglich gestört, wenn die Rückspeisung so erfolgt, dass das Temperaturniveau des eingespeisten Mediums im Wesentlichen der örtlichen Temperatur des Wärmeträgermediums im Pufferspeicher entspricht. Durch den externen Ladungs-Wärmetauscher wird der Kreislauf durch den Solarkollektor vom übrigen Kreislauf des Wärmeträgermediums entkoppelt.

Alternativ zu der obigen Variante kann Wärme vom Solarkollektor über einen Ladungs-Wärmetauscher in den Pufferspeicher eingebracht werden, was den apparativen Aufwand entsprechend verringert.

Weiters betrifft die vorliegende Erfindung eine Vorrichtung zur Erwärmung von Brauchwasser gemäß Patentanspruch 6.

Die Vorrichtung ist mit einem Pufferspeicher ausgestattet, der von einer Wärmequelle erwärmtes Wärmeträgermedium enthält, sowie mit einem Brauchwasser-Wärmetauscher, der über eine Wärmeträger-Entnahmeleitung mit dem oberen Bereich des Pufferspeichers versorgt wird. Diese Vorrichtung ist so gestaltet, dass ein im unteren Bereich des Pufferspeichers angeordneter Vorerwärmungs-Wärmetauscher vorgesehen ist, der dazu ausgebildet ist, das kalte Brauchwasser vor dem Eintritt in den Brauchwasser-Wärmetauscher zu erwärmen und dass eine Wärmeträger-Rückführleitung vorgesehen ist, die ausgehend vom Brauchwasser-Wärmetauscher in den mittleren Bereich des Pufferspeichers mündet. Eine solche Vorrichtung ermöglicht es, auch bei Vorliegen einer Brauchwasser-Zirkulationseinrichtung einen hohen Gesamtwirkungsgrad zu erzielen.

Die Erfindung sieht eine Wärmeträgerrückführleitung vor, die ausgehend vom Brauchwasser-Wärmetauschern den mittleren Bereich des Pufferspeichers mündet. Auf diese Weise wird sichergestellt, dass auch im Zirkulationsbetrieb, das heißt, wenn keine Warmwasserentnahme vorliegt, der untere Bereich des Pufferspeichers nicht vom rücklaufenden Wärmeträgermedium beeinflusst wird. Insbesondere ist dadurch eine ungewünschte Erwärmung und damit eine Zerstörung der Temperaturschichtung im Pufferspeicher vermeidbar.

In diesem Zusammenhang ist es besonders günstig, wenn von der Wärmeträger-Rückführleitung eine erste Mischleitung abzweigt, die in ein erstes Mischventil mündet, das in der Wärmeträger-Entnahmeleitung angeordnet ist. Auf diese Weise kann die Temperatur des erwärmten Brauchwassers effizient geregelt werden, in dem bei zu hoher Temperatur des Wärmeträgermediums, das aus dem Pufferspeicher entnommen wird, eine entsprechende Temperaturabsenkung durchgeführt wird, bevor dieses in den Brauchwasser-Wärmetauscher eintritt. Die Lebensdauer der Wärmeträger-Umweltpumpe kann wesentlich dadurch verbessert werden, dass diese in der Wärmeträgerrückführleitung vorgesehen ist. Dies hat seinen Grund darin, dass die Wärmeträger-Umweltpumpe nicht der hohen Temperatur des aus dem Pufferspeicher entnommenen Wärmeträgermediums ausgesetzt ist.

Eine weitere besonders vorteilhafte Ausführung der erfindungsgemäßen Vorrichtung sieht vor, dass der Vorerwärmungs-Wärmetauscher in einem durch ein Leitblech teilweise abgetrennten Bereich des Pufferspeichers angeordnet ist. Insbesondere ist es in diesem Zusammenhang besonders günstig, wenn das Leitblech im Wesentlichen zylindrisch ausgebildet ist und einen nach oben offenen zylindrischen Innenraum von einem nach oben offenen Ringraum trennt, und dass der Vorerwärmungs-Wärmetauscher vorzugsweise im Ringraum angeordnet ist. Durch diese Ausbildung werden zwei an sich widersprüchliche Ziele erreicht. Einerseits soll es zur optimalen Ausnutzung der Speicherkapazität des Pufferspeichers möglich sein, das Wärmeträgermedium in seinem Inneren auf eine hohe Temperatur zu bringen. Andererseits soll eine übermäßige Erwärmung des Brauchwassers im Vorerwärmungs-Wärmetauscher vermieden werden. Durch die räumliche Abtrennung, die durch das Leitblech erzielt wird, ist es möglich, einen überwiegenden Teil des Pufferspeicherinhaltes auf eine hohe Temperatur zu bringen und dennoch im Bereich des Vorerwärmungs-Wärmetauschers eine begrenzte Temperatur zu haben. Durch die zylindrische Ausbildung des Leitbleches wird bei Wärmezufuhr in den Pufferspeicher eine Konvektionsströmung erzeugt, die eine optimale Wärmeverteilung ermöglicht und gleichzeitig eine partielle Abschirmung des Vorerwärmungs-Wärmetauschers erzielt.

Konstruktiv besonders günstig ist es, wenn der Vorerwärmungs-Wärmetauscher als schraubenförmiger Rohr-Wärmetauscher ausgebildet ist.

Eine effiziente Begrenzung der Temperatur des Brauchwassers, das aus dem Vorerwärmungs-Wärmetauscher entnommen wird, kann durch einen Temperatursensor im Kesselwasser oberhalb des Vorerwärmungs-Wärmetauschers erzielt werden.

Eine weitere Möglichkeit, die übermäßige Erwärmung des Brauchwassers zu verhindern besteht darin, dass von einer Kaltwasser-Zufuhrleitung, die in den Vorerwärmungs-Wärmetauscher mündet, eine zweite Mischleitung abzweigt, die zu einem zweiten Mischventil führt, das in einer Brauchwasser-Zwischenleitung angeordnet ist, die den Vorerwärmungs-Wärmetauscher mit dem Brauchwasser-Wärmetauscher verbindet. Auf diese Weise, kann einem allfällig zu stark erwärmten Brauchwasser Kaltwasser beigemischt werden.

In der Folge wird die vorliegende Erfindung anhand der in den Figuren dargestellten Ausführungsbeispielen näher erläutert. Es zeigen:
- Fig. 1, Fig. 2 und Fig. 3: schematische Schaltungsdiagramme der erfindungsgemäßen Vorrichtung in einer ersten Gruppe von Ausführungsvarianten; und
- Fig. 4 und Fig. 5: schematische Schaltungsdiagramme von nicht erfindungsgemäßen Vorrichtungen in einer zweiten Gruppe von Ausführungsvarianten.

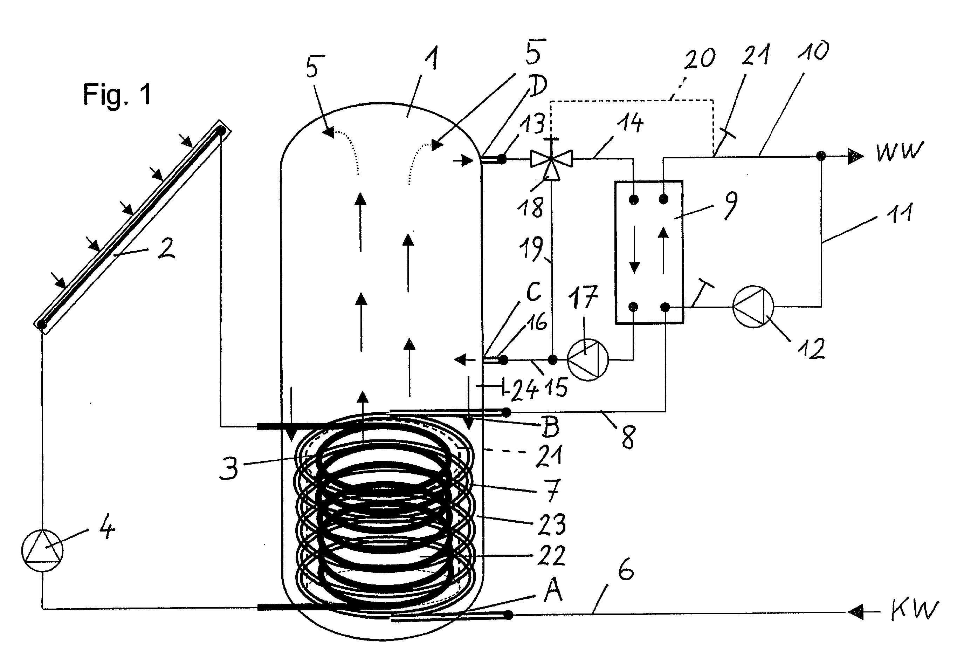

In den Diagrammen der Fig. 1, Fig. 2 und Fig. 3 ist jeweils eine als Solaranlage ausgebildete Vorrichtung dargestellt. Diese Vorrichtung ist sowohl für die Beheizung von Räumlichkeiten als auch zur Erwärmung von Brauchwasser vorgesehen. Um die Darstellung zu vereinfachen und die Verständlichkeit zu erhöhen, sind die für die Raumheizung vorgesehenen Anlagenteile, die in herkömmlicher Weise ausgebildet sind, weggelassen. Weiters sind auch allenfalls vorhandene konventionelle Anlagenteile, wie Heizkessel, Wärmepumpen und dergleichen nicht dargestellt.

Die Vorrichtung von Fig. 1 besteht aus einem Pufferspeicher 1, der über einen Sonnenkollektor 2 erwärmt wird. Dies erfolgt in an sich bekannter Weise so, dass das im Sonnenkollektor 2 erwärmte Solarmedium durch einen Rohr-Wärmetauscher 3 geführt wird, der im unteren Bereich des Pufferspeichers 1 schraubenförmig angeordnet ist. Die Umwälzung des Solarmediums wird über eine Umwälzpumpe 4 bewerkstelligt. Pfeile 5 deuten die Konvektionsströmung des Wärmeträgermediums innerhalb des Pufferspeichers 1 an, wenn die Ladung durch den Sonnenkollektor 2 erfolgt.

Die Warmwasserbereitung bei der Ausführungsvariante von Fig. 1 erfolgt in der Weise, dass über eine Kaltwasser-Zufuhrleitung 6 Kaltwasser über Anschluss A zum Pufferspeicher 1 geführt wird und in einem Vorerwärmungs-Wärmetauscher 7 auf eine höhere Temperatur gebracht wird. Der Vorerwärmungs-Wärmetauscher 7 ist ebenfalls als Rohr-Wärmetauscher ausgebildet und kann konzentrisch zum Ladungs-Wärmetauscher 3 im unteren Bereich des Pufferspeichers 1 angeordnet sein. Das aus dem Vorerwärmungs-Wärmetauscher 7 austretende vorerwärmte Brauchwasser wird über Anschluss B und eine Zwischenleitung 8 zu einem Brauchwasser-Wärmetauscher 9 geführt, um auf die gewünschte Solltemperatur gebracht zu werden. Über eine Warmwasserleitung 10 wird das Brauchwasser zu den einzelnen Verbrauchern geführt. Von der Warmwasserleitung 10 zweigt eine Zirkulationsleitung 11 ab, über die das nicht verbrauchte Brauchwasser zum Brauchwasser-Wärmetauscher 9 rückgeführt wird. Eine Zirkulationspumpe 12 hält diesen Kreislauf aufrecht. Auf diese Weise steht an den Verbrauchsstellen stets unmittelbar heißes Brauchwasser ohne Anlaufverzögerung zur Verfügung. Die Erwärmung des Brauchwassers im Brauchwasser-Wärmetauscher 9 erfolgt dadurch, dass an einer Entnahmestelle 13 (Anschluss D), die im oberen Bereich des Pufferspeichers 1 vorgesehen ist, heißes Wärmeträgermedium entnommen wird. Dieses Wärmeträgermedium wird über eine Wärmeträgerentnahmeleitung 14 zum Brauchwasser-Wärmetauscher 9 geführt und nach Durchströmung in einer Wärmeträgerrückführleitung wieder in den Pufferspeicher 1 eingespeist. Diese Rückführung erfolgt an einer Anschlussstelle 16, die im mittleren Bereich des Pufferspeichers 1 angeordnet ist. Jedenfalls befindet sich der Anschluss C bei 16 oberhalb des Vorerwärmungs-Wärmetauschers 3. Die Umwälzung des Wärmeträgermediums erfolgt durch eine Wärmeträgerumwälzpumpe 17, die in der Wärmeträgerrückfuhrleitung 15 angeordnet ist.

In der Wärmeträgerentnahmeleitung 14 ist ein erstes Mischventil 18 vorgesehen, das mit einer Mischleitung 19 verbunden ist, die von der Wärmeträgerrückführleitung 15 abzweigt. Das Mischventil 18 wird über eine Steuerleitung 20 angesteuert, die mit einem Temperaturserisor 21 in Verbindung steht, der die Temperatur des erwärmten Brauchwassers in der Warmwasserleitung 10 misst. Durch diese Regelung wird gewährleistet, dass die Temperatur in der Wärmeträgerentnahmeleitung 14 nie wesentlich größer ist als die Solltemperatur des erwärmten Brauchwassers. Auf diese Weise kann die Kalkablagerung im Brauchwasser-Wärmetauscher 9 wirkungsvoll verringert werden.

Zwischen dem Ladungs-Wärmtauscher 3 und dem Vorerwärmungs-Wärmetauscher 7 ist im Pufferspeicher 1 ein zylindrisches Leitblech 21 angeordnet, das einen nach oben und unten offenen zylindrischen Innenraum 22 von einem Ringraum 23 trennt, in dem Vorerwärmungs-Wärmetauscher 7 angeordnet ist. Das Leitblech 21 weist geeignete Öffnungen auf, um eine begrenzte Konvektion zwischen den Räumen 22 und 23 zu ermöglichen. Oberhalb des Ringraumes 23 ist ein weiterer Temperatursensor 24 vorgesehen, der die Temperatur des Wärmeträgermediums in diesem Bereich misst. Übersteigt diese Temperatur einen Grenzwert, der um ein vorbestimmtes Maß über dem Sollwert der Brauchwassertemperatur liegt, dann wird die weitere Beladung des Pufferspeichers 1 unterbunden, um eine übermäßige Erwärmung des Brauchwassers im Vorerwärmungs-Wärmetauscher 7 zu verhindern.

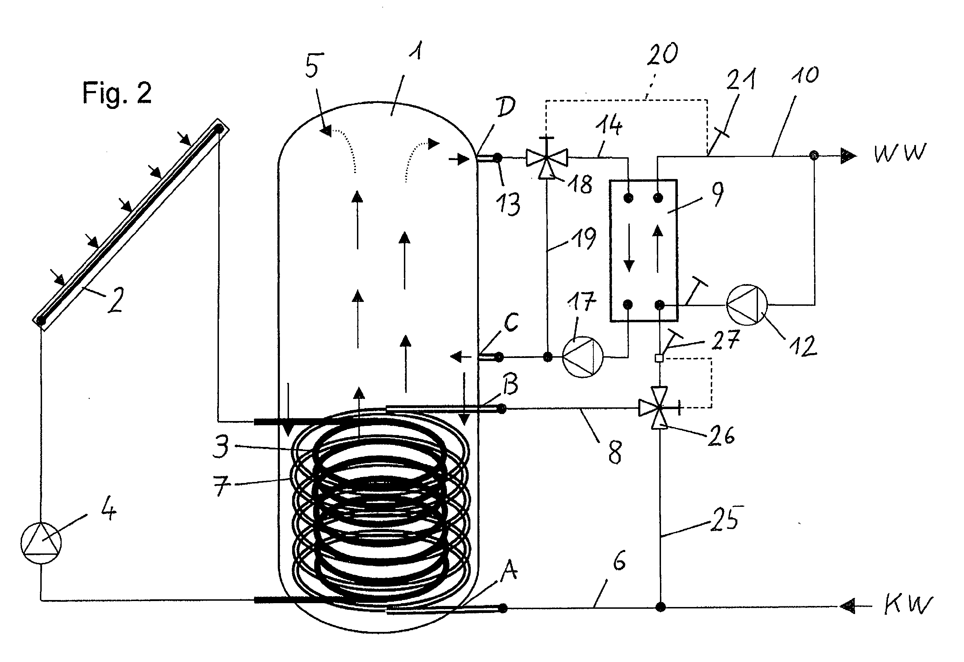

Die Ausführungsvariante von Fig. 2 ist in großen Teilen gleichartig zu der von Fig. 1 ausgeführt. Lediglich die Aufgabe der Begrenzung der Erwärmung des Brauchwassers im Vorerwärmungs-Wärmetauscher 7 ist alternativ gelöst. Von der Kaltwasserzufuhrleitung 6 zweigt bei dieser Ausführungsvariante eine zweite Mischleitung 25 ab, die zu einem zweiten Mischventil 26 führt, das in der Brauchwasserzwischenleitung 8 vorgesehen ist. Dieses zweite Mischventil 26 wird über einen Temperatursensor 27 gesteuert, der in der Brauchwasserzwischenleitung 8 stromaufwärts des zweiten Mischventils 26 angeordnet ist.

Bei der Ausführungsvariante gemäß Fig. 2 kann der Pufferspeicher 1 frei von Einbauten, wie etwa dem Leitblech 21 der ersten Ausführungsvariante ausgeführt werden, so dass hier der gesamte Innenraum des Pufferspeichers 1 ohne Begrenzung der Maximaltemperatur zufolge des Sollwertes der Brauchwassertemperatur zur Verfügung steht.

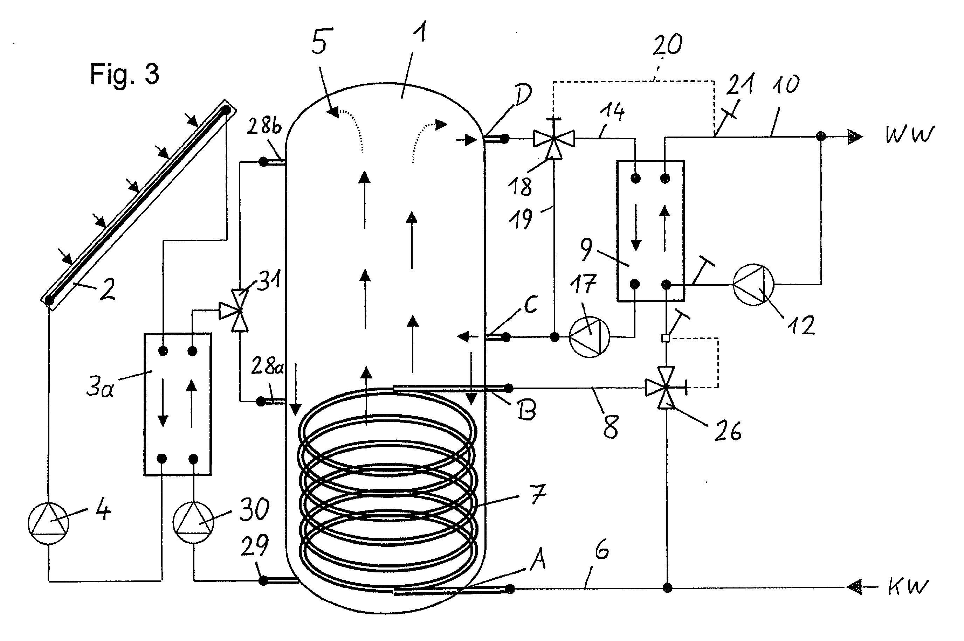

Die Ausführungsvariante von Fig. 3 sieht einen externen Ladungs-Wärmtauscher 3a vor, um die Wärme vom Solarkollektor 2 auf das Wärmeträgermedium zu übertragen. Das Wärmeträgermedium wird unten bei 29 entnommen und über eine Pumpe 30 durch den externen Ladungs-Wärmtauscher 3a gefördert. Eine optimale Aufrechterhaltung der Temperaturschichtung wird durch mehrere Einspeisungs-Anschlüsse 28a, 28b erreicht, die je nach thermischer Situation im Pufferspeicher 1 durch ein Ventil 31 angesteuert werden.

In der Folge wird die Wirkungsweise der erfindungsgemäßen Vorrichtung beispielhaft anhand einiger Betriebszustände erklärt. Bei allen Ausführungsbeispielen wird von einer Brauchwasser-Solltemperatur von 55°C ausgegangen:

### Betriebszustand 1 (Ausführungsvarianten von Fig. 1, Fig. 2 und von Fig. 3)

Die Temperatur des Pufferspeichers beträgt unten (Anschlüsse A, B) 30°C, oben (Anschluss D) 60°C. Das Kaltwasser wird mit einer Temperatur von 10°C in den Vorerwärmungs-Wärmetauscher 7 geführt und verlässt diesen mit einer Temperatur von 27°C. Im Brauchwasser-Wärmetauscher 9 wird die Temperatur auf die Solltemperatur von 55°C gebracht. Im Pufferspeicher 1 wird an der Wärmeträgerentnahmestelle 13 (Anschluss D) das Wärmeträgermedium mit einer Temperatur von 60°C entnommen und im Wesentlichen mit dieser Temperatur zum Brauchwasser-Wärmetauscher 9 geführt. Das Mischventil 18 sperrt dabei die erste Mischleitung 19 fast vollständig ab, so dass nur unwesentliche Teilströme des Wärmeträgermediums über die erste Mischleitung 19 zugemischt werden. Das Wärmeträgermedium wird mit einer Temperatur von etwa 30°C in den Pufferspeicher 1 rückgespeist. Es ist somit ersichtlich, dass auf diese Weise die Temperaturschichtung im Pufferspeicher 1 nicht wesentlich beeinflusst wird.

### Betriebszustand 2 (Ausführungsvarianten von Fig. 1, Fig. 2 und von Fig. 3)

Die Temperatur des Pufferspeichers beträgt unten (Anschlüsse A, B) 40°C, oben (Anschluss D) 90°C. In diesem Betriebszustand wird das Kaltwasser im Vorerwärmungs-Wärmetauscher 7 auf eine Temperatur von 37°C gebracht, mit der es in den Brauchwasserwärmetauscher 9 eintritt. In diesem Betriebszustand wird die Temperatur des bei 13 (Anschluss D) entnommenen Wärmeträgermediums von 90°C im ersten Mischventil 18 auf etwa 58°C verringert, indem eine wesentliche Menge von Brauchwasser über die erste Mischleitung 19 rückgeführt wird. Das Wärmeträgermedium wird bei 16 mit einer Temperatur von etwa 43°C in den Pufferspeicher 1 rückgeführt. Auch hier wird die Temperaturschichtung im Pufferspeicher 1 nicht gestört.

### Betriebszustand 3 (Ausführungsvariante von Fig. 1)

Die Temperatur im Pufferspeicher 1 beträgt bei Anschluss C > 60°C, oben (Anschluss D) 90°C. Die Umwälzpumpe 4 wird so gesteuert, dass an der Messstelle 24 eine Temperatur von beispielsweise 58°C nicht überschritten wird. Somit ist das Wärmeträgermedium in der Zwischenleitung 8 auch auf diese Temperatur begrenzt und wird nach Durchströmen des Brauchwasser-Wärmetauschers 9 mit dieser Temperatur angeboten. Die Wärmeträgerumwälzpumpe 17 ist in diesem Betriebszustand nicht im Betrieb, da im Brauchwasser-Wärmetauscher 9 keine weitere Erwärmung des Brauchwassers stattfindet. Im zylindrischen Innenraum 22 kann in diesem Betriebszustand eine deutlich höhere Temperatur vorliegen als 60°C, da dieser Innenraum 22 durch das Leitblech 21 vom Ringraum 23 und damit dem Vorerwärmungs-Wärmetauscher 7 abgeschirmt ist.

### Betriebszustand 4 (Ausführungsvariante von Fig. 2 und Fig. 3)

Die Temperatur im Pufferspeicher 1 beträgt durchgängig etwa 90°C. Das Brauchwasser verlässt bei dieser Ausführungsvariante den Vorerwärmungs-Wärmetauscher 3 mit einer Temperatur von etwa 87°C. Über die zweite Mischleitung 25 wird im zweiten Mischventil 26 eine ausreichende Menge Kaltwasser zugemischt, um bei 27 und damit auch letztlich beim Verbraucher die Solltemperatur von 55°C zu erhalten. Auch hier ist die Wärmeträgerumwälzpumpe 17 nicht im Betrieb.

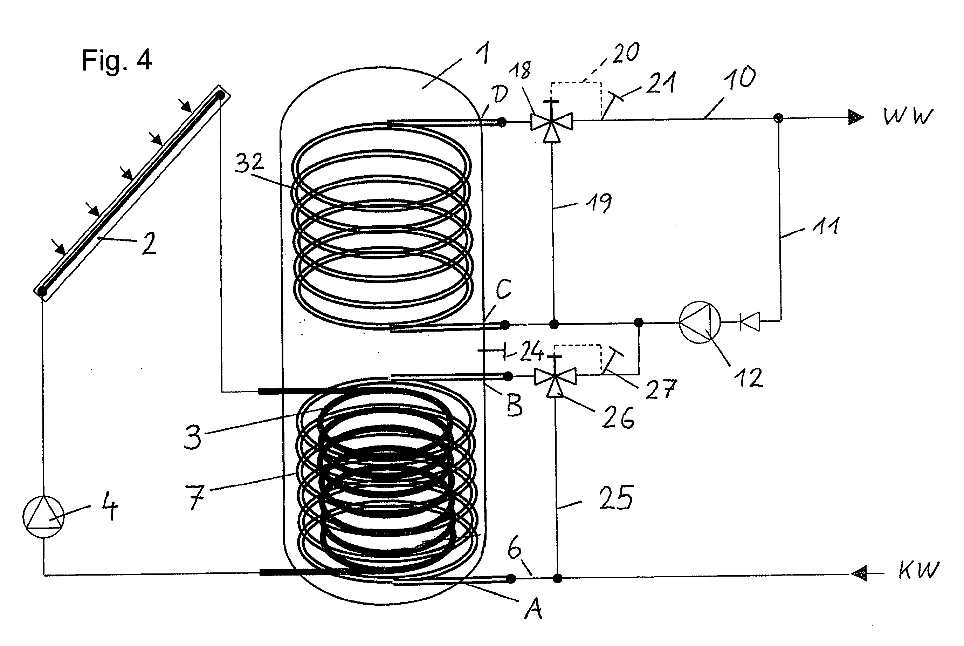

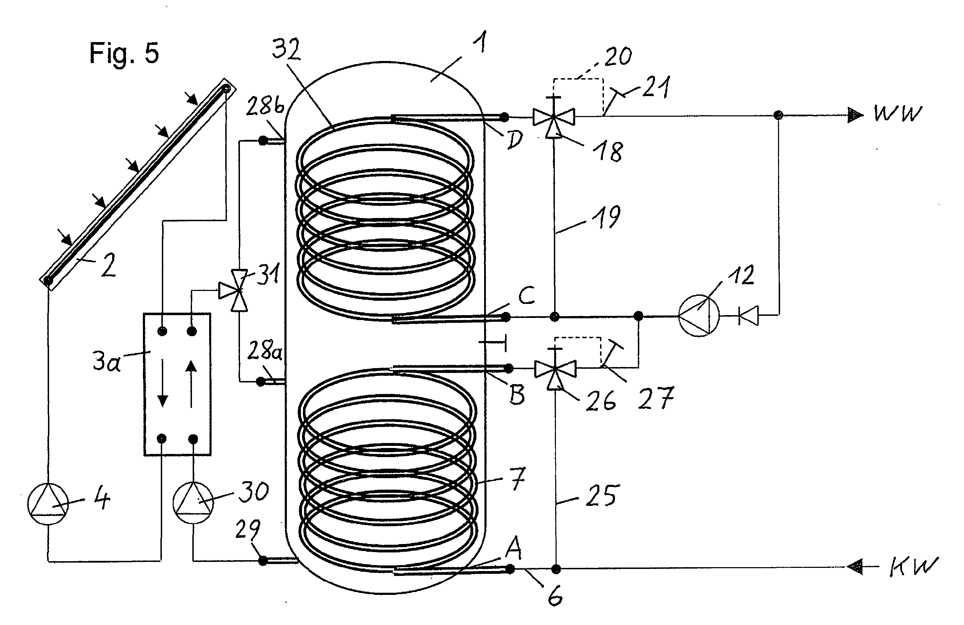

Die zweite Gruppe von Ausführungsvarianten gemäß Fig. 4 und Fig. 5 unterscheidet sich dadurch von den oben dargestellten Lösungen, dass die endgültige Erwärmung des Brauchwassers in einem oberen Wärmetauscher 32 erfolgt, der im oberen Bereich des Pufferspeichers 1 angeordnet ist.

In analoger Weise ist ein Mischventil 18 vorgesehen, das die Zumischung von weniger warmem Brauchwasser über eine Mischleitung 19 steuert.

Die Anschlüsse C und D entsprechen in ihrer Lage denen der obigen Ausführungsvariante, mit dem Unterschied, dass sie zum oberen Wärmetauscher 32 gehören.

In der Folge wird die Wirkungsweise der zweiten Ausführungsvariante anhand entsprechender Betriebszustände erklärt. Wie oben wird von einer Brauchwasser-Solltemperatur von 55°C ausgegangen:

### Betriebszustand 1a (Ausführungsvarianten von Fig. 4 und von Fig. 5)

Die Temperatur des Pufferspeichers beträgt unten (Anschlüsse A, B) 30°C, oben (Anschluss D) 60°C. Das Kaltwasser wird mit einer Temperatur von 10°C in den Vorerwärmungs-Wärmetauscher 7 geführt und verlässt diesen mit einer Temperatur von 27°C. Im oberen Wärmetauscher 32 wird die Temperatur auf etwa 57° gebracht. Das Mischventil 18 sperrt dabei die erste Mischleitung 19 fast vollständig ab, so dass die Solltemperatur von 55°C erreicht wird.

### Betriebszustand 2a (Ausführungsvarianten von Fig. 4 und von Fig. 5)

Die Temperatur des Pufferspeichers beträgt unten (Anschlüsse A, B) 40°C, oben (Anschluss D) 90°C. In diesem Betriebszustand wird das Kaltwasser im Vorerwärmungs-Wärmetauscher 7 auf eine Temperatur von 37°C gebracht, mit der es in den oberen Wärmetauscher 32 eintritt. In diesem Betriebszustand wird die Temperatur des am Anschluss D entnommenen Brauchwassers von etwa 87°C im ersten Mischventil 18 auf die Solltemperatur von 55°C verringert, indem eine wesentliche Menge von Brauchwasser über die erste Mischleitung 19 rückgeführt wird.

### Betriebszustand 3a (nicht dargestellt)

Auch bei zweiten Ausführungsvariante ist es möglich, auf die zweite Mischleitung 25 und das zweite Mischventil 26 zu verzichten. Analog zu Betriebszustand 3 wird dann die Temperatur an der Messstelle 24 auf beispielsweise 55°C begrenzt und das Brauchwasser zur Gänze über die erste Mischleitung 19 am oberen Wärmetauscher 32 vorbei geführt.

### Betriebszustand 4a (Ausführungsvariante von Fig. 4 und Fig. 5)

Die Temperatur im Pufferspeicher 1 beträgt durchgängig etwa 90°C. Das Brauchwasser verlässt bei dieser Ausführungsvariante den Vorerwärmungs-Wärmetauscher 3 mit einer Temperatur von etwa 87°C. Über die zweite Mischleitung 25 wird im zweiten Mischventil 26 eine ausreichende Menge Kaltwasser zugemischt, um bei 27 und damit auch letztlich beim Verbraucher die Solltemperatur von 55°C zu erhalten.

Die vorliegende Erfindung ermöglicht es, ein System zur Erwärmung von Brauchwasser anzugeben, das extrem energieeffizient ist.

## Patentansprüche

1. Verfahren zur Erwärmung von Brauchwasser, bei dem in mindestens einem Pufferspeicher (1) ein Wärmeträgermedium erwärmt wird und unter Einhaltung einer Temperaturschichtung gespeichert wird, wobei das Brauchwasser durch Wärme aus dem oberen Bereich des Pufferspeichers (1) erwärmt wird, wobei das Brauchwasser vor dieser Erwärmung durch einen Vorerwärmungs-Wärmetauscher (7) geführt wird der im unteren Bereich des Pufferspeichers (1) angeordnet ist, **dadurch gekennzeichnet, dass** das Wärmeträgermedium nach Durchlaufen eines Brauchwasser-Wärmetauschers (9) in den mittleren Bereich des Pufferspeichers (1) rückgeführt wird.

2. Verfahren nach Anspruch 1, **dadurch gekennzeichnet, dass** das Brauchwasser dadurch erwärmt wird, dass aus dem oberen Bereich des Pufferspeichers (1) heißes Wärmeträgermedium entnommen wird und zu einem Brauchwasser-Wärmetauscher (9) geführt wird, und dass das Brauchwasser vor dem Eintritt in den Brauchwasser-Wärmetauscher (9) durch den Vorerwärmungs-Wärmetauscher (7) geführt wird.

3. Verfahren nach Anspruch 2, **dadurch gekennzeichnet, dass** das aus dem oberen Bereich des Pufferspeichers (1) entnommene Wärmeträgermedium mit Wärmeträgermedium gemischt wird, das den Brauchwasser-Wärmetauscher (9) durchlaufen hat.

4. Verfahren nach einem der Ansprüche 2 oder 3, **dadurch gekennzeichnet, dass** die Temperatur des Pufferspeichers (1) im Bereich des Vorerwärmungs-Wärmetauschers (7) gemessen wird und bei Überschreitung eines vorbestimmten Grenzwerts Kaltwasser dem im Vorerwärmungs-Wärmetauscher (7) erwärmten Brauchwasser zugemischt wird.

5. Verfahren nach einem der Ansprüche 1 bis 4, **dadurch gekennzeichnet, dass** die Erwärmung des Wärmeträgermediums im Pufferspeicher (1) durch einen Solarkollektor (2) erfolgt, indem Wärme über einen Ladungs-Wärmetauscher (3) in den Pufferspeicher (1) eingebracht wird, oder indem Wärmeträgermedium aus dem unteren Bereich des Pufferspeichers (1) entnommen wird, in einem von einem durch einen Solarkreislauf gespeisten externen Ladungs-Wärmetauscher (3a) erwärmt wird und in den Pufferspeicher (1) rückgeführt wird, wobei vorzugsweise die Höhe der Einspeisung in Abhängigkeit von der Temperaturschichtung im Pufferspeicher (1) gewählt wird.

6. Vorrichtung zur Erwärmung von Brauchwasser, mit einem Pufferspeicher (1), der von einer Wärmequelle erwärmtes Wärmeträgermedium enthält, und mit einem Brauchwasser-Wärmetauscher (9) zur Erwarmung des Brauchwassers durch Wärme aus dem oberen Bereich des Pufferspeichers (1), wobei ein im unteren Bereich des Pufferspeichers (1) angeordneter Vorerwärmungs-Wärmetauscher (7) vorgesehen ist, der dazu ausgebildet ist, das kalte Brauchwasser zu erwärmen, wobei der Brauchwasser-Wärmetauscher (9) das im Vorerwärmungs-Wärmetauscher (7) erwärmte Brauchwasser weiter erwärmt, **dadurch gekennzeichnet, dass** der Brauchwasser-Wärmetauscher über eine Wärmeträger-Entnahmeleitung (14) mit dem oberen Bereich des Pufferspeichers (1) versorgt wird, und dass weiterhin eine Wärmeträger-Rückführleitung (15) vorgesehen ist, die ausgehend vom Brauchwasser-Wärmetauscher (9) in den mittleren Bereich des Pufferspeichers (1) mündet.

7. Vorrichtung nach Anspruch 6, **dadurch gekennzeichnet, dass** von der Wärmeträger-Rückführleitung (15), in der vorzugsweise eine WärmeträgerUmwälzpumpe (17) vorgesehen ist, eine erste Mischleitung (19) abzweigt, die in ein erstes Mischventil (18) mündet, das in der Wärmeträger-Entnahmeleitung (14) angeordnet ist.

8. Vorrichtung nach einem der Ansprüche 6 oder 7, **dadurch gekennzeichnet, dass** der Vorerwärmungs-Wärmetauscher (7) in einem durch ein Leitblech (21) teilweise abgetrennten Bereich (23) des Pufferspeichers (1) angeordnet ist.

9. Vorrichtung nach Anspruch 8, **dadurch gekennzeichnet, dass** das Leitblech (21) im Wesentlichen zylindrisch ausgebildet ist und einen nach oben offenen zylindrischen Innenraum (22) von einem nach oben und unten offenen Ringraum (23) trennt, und dass der Vorerwärmungs-Wärmetauscher (7) vorzugsweise im Ringraum (23) angeordnet ist.

10. Vorrichtung nach einem der Ansprüche 6 bis 9, **dadurch gekennzeichnet, dass** oberhalb des Vorerwärmungs-Wärmetauschers (7) ein Temperatursensor (24) zur Messung der Temperatur des Wärmeträgermediums vorgesehen ist.

11. Vorrichtung nach einem der Ansprüche 6 bis 10, **dadurch gekennzeichnet, dass** von einer Kaltwasser-Zufuhrleitung (6), die in den Vorerwärmungs-Wärmetauscher mündet, eine zweite Mischleitung (25) abzweigt, die zu einem zweiten Mischventil (26) führt, das in einer Brauchwasser-Zwischenleitung (8) angeordnet ist, die den Vorerwärmungs-Wärmetauscher (7) mit dem Brauchwasser-Wärmetauscher (9) verbindet.

12. Vorrichtung nach einem der Ansprüche 6 bis 11 **dadurch gekennzeichnet, dass** eine Brauchwasser-Zirkulationsleitung (11) vorgesehen ist, die nicht entnommene Brauchwasser in den Brauchwasser-Wärmetauscher (9) bzw. in den oberen Wärmetauscher (32) rückführt.

13. Vorrichtung nach einem der Ansprüche 6 bis 12, **dadurch gekennzeichnet, dass** ein im unteren Bereich des Pufferspeichers (1) angeordneter Ladungs-Wärmetauscher (3) vorgesehen ist, der mit einem Sonnenkollektor (2) verbunden ist.

14. Vorrichtung nach einem der Ansprüche 6 bis 13, **dadurch gekennzeichnet, dass** ein externer Ladungs-Wärmetauscher (3a) vorgesehen ist, der einerseits mit einem Sonnenkollektor (2) und andererseits mit dem Pufferspeicher (1) und zwar vorzugsweise über mehrere Einspeisungs-Anschlüsse (28a, 28b) verbunden ist.

## Claims

1. A method for heating service water, in which a heat carrier medium is heated in at least one buffer storage tank (1) and is stored by maintaining a temperature stratification, wherein the service water is heated by heat from the upper region of the buffer storage tank (1), wherein the service water is guided prior to said heating through a preheating heat exchanger (7) which is arranged in the bottom region of the butter storage tank (1), **characterised in that** the heat carrier medium is returned to the middle region of the buffer storage tank (1) after passing through a service-water heat exchanger (9).

2. A method according to claim 1, **characterised in that** the service water is heated in such a way that hot heat carrier medium is taken from the upper region of the buffer storage tank (1) and is guided to a service-water heat exchanger (9), and that the service water is guided through the preheating heat exchanger (7) prior to the entrance into the service-water heat exchanger (9).

3. A method according to claim 2, **characterised in that** that the heat carrier medium taken from the upper region of the buffer storage tank (1) is mixed with the heat carrier medium which has passed through the service-water heat exchanger (9).

4. A method according to one of the claims 2 or 3, **characterised in that** the temperature of the buffer storage tank (1) is measured in the region of the preheating heat exchanger (7), and cold water is mixed into the service water heated in the preheating heat exchanger (7) upon exceeding a predetermined threshold value.

5. A method according to one of the claims 1 to 4, **characterised in that** the heating of the heat carrier medium occurs in the buffer storage tank (1) by a solar collector (2), **in that** heat is introduced via a charge heat exchanger (3) into the buffer storage tank (1), or **in that** heat carrier medium is taken from the bottom region of the buffer storage tank (1), is heated in an external charge heat exchanger (3a) supplied by a solar circuit, and is returned into the buffer storage tank (1), wherein preferably the level of the feeding is chosen depending on the temperature stratification in the buffer storage tank (1).

6. An apparatus for heating service water, comprising a buffer storage tank (1) which contains a heat carrier medium heated by a heat source, and a service-water heat exchanger (9) for heating the service water by heat from the upper region of the buffer storage tank (1), wherein a preheating heat exchanger (7) is provided which is arranged in the bottom region of the buffer storage tank (1), said preheating heat exchanger being provided for heating the cold service water, wherein the service-water heat exchanger (9) further heats the service water heated in the preheating heat exchanger (7), **characterised in that** the service-water heat exchanger is supplied via a heat-carrier withdrawal line (14) with the upper region of the buffer storage tank (1), and that further a heat-carrier return line (15) is provided, which originating from the service-water heat exchanger (9) opens into the middle region of the buffer storage tank (1).

7. An apparatus according to claim 6, **characterised in that** a first mixing line (19) branches off from the heat-carrier return line (15), in which a heat-carrier circulating pump (17) is preferably provided, said first mixing line opening into a first mixing valve (18) which is arranged in the heat-carrier withdrawal line (14).

8. An apparatus according to one of the claims 6 or 7, **characterised in that** the preheating heat exchanger (7) is arranged in a region (23) of the buffer storage tank (1) which is partly separated by a baffle plate (21).

9. An apparatus according to claim 8, **characterised in that** the baffle plate (21) is arranged substantially cylindrically and separates an upwardly open cylindrical interior space (22) from an upwardly and downwardly open annular space (23), and that the preheating heat exchanger (7) is preferably arranged in the annular space (23).

10. An apparatus according to one of the claims 6 to 9, **characterised in that** a temperature sensor (24) for measuring the temperature of the heat carrier medium is provided above the preheating heat exchanger (7).

11. An apparatus according to one of the claims 6 to 10, **characterised in that** a second mixing line (25) branches off from a cold-water feed line (6) which opens into the preheating heat exchanger, said second mixing line leading to a second mixing valve (26) which is arranged in a service-water intermediate line (8) which connects the preheating heat exchanger (7) to the service-water heat exchanger (9).

12. An apparatus according to one of the claims 6 to 11, **characterised in that** a service-water circulation line (11) is provided which returns non-removed service water into the service-water heat exchanger (9) or into the upper heat exchanger (32).

13. An apparatus according to one of the claims 6 to 12, **characterised in that** a charge heat exchanger (3) is provided which is arranged in the bottom region of the buffer storage tank (1) and which is connected to a solar collector (2).

14. An apparatus according to one of the claims 6 to 13, **characterised in that** an external charge heat exchanger (3a) is provided which is connected to a solar collector (2) on the one hand and to the buffer storage tank (1) on the other hand, preferably via several feeding connections (28a, 28b).

## Revendications

1. Procédé de chauffage d'eau non potable,
selon lequel, on chauffe un fluide caloporteur dans au moins un réservoir accumulateur tampon (1), et on le stocke en maintenant une stratification de la température, l'eau non potable étant chauffée par de la vapeur provenant de la zone supérieure du réservoir accumulateur tampon (1), avant ce chauffage, l'eau non potable étant transférée dans un échangeur de préchauffage (7) monté dans la zone inférieure du réservoir accumulateur tampon (1),
**caractérisé en ce que**
le fluide caloporteur est ramené dans la zone médiane du réservoir accumulateur tampon (1) après avoir traversé un échangeur de chaleur d'eau non potable (9).

2. Procédé conforme à la revendication 1,
**caractérisé en ce que**
l'eau non potable est chauffée en prélevant du fluide caloporteur chaud dans la zone supérieure du réservoir accumulateur tampon (1) et en le transférant vers un échangeur de chaleur d'eau non potable (9), et l'eau non potable (9) est, avant son entrée dans l'échangeur de chaleur d'eau non potable (9), transférée au travers de l'échangeur de préchauffage (7).

3. Procédé conforme à la revendication 2,
selon lequel
le fluide caloporteur prélevé dans la zone supérieure du réservoir accumulateur tampon (1) est mélangé avec du fluide caloporteur qui a traversé l'échangeur de chaleur d'eau non potable (9).

4. Procédé conforme à l'une des revendications 2 ou 3,
**caractérisé en ce que**
la température du réservoir accumulateur tampon (1) dans la zone de l'échangeur de préchauffage (7) est mesurée et lorsque cette température dépasse une valeur limite prédéterminée, de l'eau froide est mélangée à l'eau non potable chauffée dans l'échangeur de préchauffage (7).

5. Procédé conforme à l'une des revendications 1 à 4,
**caractérisé en ce que**
le chauffage du fluide caloporteur dans le réservoir accumulateur tampon (1) est effectué par l'intermédiaire d'un collecteur solaire (2), en transférant de la chaleur par un échangeur de chaleur de charge (3) dans le réservoir accumulateur tampon (1) ou en prélevant du fluide caloporteur de la zone inférieure du réservoir accumulateur tampon (1), en le chauffant dans un échangeur de chaleur de charge externe (3a) alimenté par un circuit solaire et en le renvoyant dans le réservoir accumulateur tampon (1), de préférence l'importance de l'alimentation étant choisie en fonction de la stratification de la température dans le réservoir accumulateur tampon (1).

6. Dispositif de chauffage d'eau non potable comportant un réservoir accumulateur tampon (1) qui renferme un fluide caloporteur chauffé par une source de chaleur, ainsi qu'un échangeur de chaleur d'eau non potable (9) permettant de chauffer l'eau non potable par de la chaleur provenant de la zone supérieure du réservoir accumulateur tampon (1), dans la zone inférieure du réservoir accumulateur tampon (1) étant monté un échangeur de préchauffage (7) qui est réalisé pour chauffer l'eau non potable, l'échangeur de chaleur d'eau non potable (9) poursuivant le chauffage de l'eau non potable chauffée dans l'échangeur de préchauffage (7),
**caractérisé en ce que**
l'échangeur de chaleur d'eau non potable (9) est alimenté par une conduite de prélèvement de fluide caloporteur (14) avec la zone supérieure du réservoir accumulateur tampon (1), et il est en outre prévu une conduite de retour du fluide caloporteur (15) qui débouche, à partir de l'échangeur d'eau non potable (9) dans la zone médiane du réservoir accumulateur tampon (1).

7. Dispositif conforme à la revendication 6,
**caractérisé en ce qu'**
sur la conduite de retour (15) du fluide caloporteur dans laquelle est, de préférence, montée une pompe de circulation (17), est monté en déviation une première conduite de mélange (19) qui débouche dans une première soupape mélangeuse (18) qui est montée dans la conduite de prélèvement (14) du fluide caloporteur.

8. Dispositif conforme à l'une des revendications 6 et 7,
**caractérisé en ce que**
l'échangeur de préchauffage (7) est monté dans une zone (23) du réservoir accumulateur tampon (1) partiellement subdivisé par une tôle de guidage (21).

9. Dispositif conforme à la revendication 8,
**caractérisé en ce que**
la tôle de guidage (21) est essentiellement cylindrique et sépare une chambre interne cylindrique (22) ouverte vers le haut d'une chambre annulaire (23) ouverte vers le haut et vers le bas, et l'échangeur de préchauffage (7) est de préférence monté dans la chambre annulaire (23).

10. Dispositif conforme à l'une des revendications 6 à 9,
**caractérisé en ce qu'**
au-dessus de l'échangeur de préchauffage (7) est monté un capteur de température (24) pour permettre de mesurer la température du fluide caloporteur.

11. Dispositif conforme à l'une des revendications 6 à 10,
**caractérisé en ce qu'**
sur une conduite d'alimentation en eau froide (6) qui débouche dans l'échangeur de préchauffage, est monté en dérivation une seconde conduite de mélange (25) qui conduit à une seconde soupape mélangeuse (26) qui est montée dans une conduite intermédiaire d'eau non potable (8) qui relie l'échangeur de préchauffage (7) avec l'échangeur d'eau non potable (9).

12. Dispositif conforme à l'une des revendications 6 à 11,
**caractérisé en ce qu'**
il comporte une conduite de circulation d'eau non potable (11) qui retourne l'eau non potable non prélevée dans l'échangeur de chaleur d'eau non potable (9) ou dans l'échangeur de chaleur supérieur (32).

13. Dispositif conforme à l'une des revendications 6 à 12,
**caractérisé en ce qu'**
il comporte un échangeur de chaleur de charge (3) monté dans la zone inférieure du réservoir accumulateur tampon (1) et qui est relié à un collecteur solaire (2).

14. Dispositif conforme à l'une des revendications 6 à 13,
**caractérisé en ce qu'**
il comporte un échangeur de chaleur de charge externe (3a) qui est relié, d'une part, à un collecteur solaire (2) et, d'autre part, au réservoir accumulateur tampon (1), et ce de préférence par l'intermédiaire de plusieurs raccords d'alimentation (28a, 28b).
